# EUROPEAN PATENT SPECIFICATION

(11) **EP 3 240 742 B1**
(45) Date of publication and mention of the grant of the patent: **24.08.2022**
(21) Application number: 14818903.8
(22) Date of filing: 09.12.2014
(51) Int. Cl.: B65G 47/14

(54) **A COMPONENT FEEDER**
KOMPONENTENZUFÜHRER
UNITÉ D'ALIMENTATION EN COMPOSANTS

(43) Date of publication of application: 08.11.2017
(73) Proprietor: ABB Schweiz AG, 5400 Baden (CH)
(72) Inventor: SIRKETT, Daniel, S-722 10 Västerås (SE)
(74) Representative: Kransell & Wennborg KB
(86) International application number: PCT/EP2014/076950
(87) International publication number: WO 2016/091283

(56) References cited:
- EP-A1- 2 253 415
- WO-A1-2012/167846
- WO-A1-2013/113535
- US-B2- 7 028 829

## Description

### Technical field of the invention

The present invention relates to a component feeder comprising a container for storage of components, a component supporting arrangement comprising a component supporting member and a component presentation surface, and a transfer arrangement for transferring components from the container onto the component presentation surface. When the components are located on the presentation surface, they may be picked by for example an industrial robot.

### Background

In automated industrial systems, such as production lines where for example industrial robots are used, components stored in a disordered bulk storage are required to be fed as individual components, correctly oriented, in order for various operations to be performed. There exist many feeding devices using different principles and which are suitable for different specific tasks.

One type of feeder is the type in which randomly oriented components are fed onto and displayed on a display surface, generally also called component presentation surface. An image processing system is typically used in order to determine which components on the component presentation surface that are correctly oriented in order to be pickable by for example a robot tool. These types of feeders are flexible since they are not limited to a certain type of component, at least not to the same extent as for example vibratory bowl feeders, and are therefore often named flexible parts feeders or flex feeders. In US7028829 is disclosed such a flexible parts feeder. Components are stored in a bulk storage and are fed onto an oscillating conveyor surface where they are randomly distributed. This arrangement is rather space demanding in relation to the actual pick surface, since the container is located beside the feeder. The entire transport system is also of a complex design. The concept of this patent is used in the commercially available "Anyfeed" flexible parts feeder.

Another type of flexible parts feeder which is less space demanding is the type having a bulk storage container, and a component presentation surface on top of the container. Such a flexible parts feeder according to the preamble of claim 1 is described in WO 2013/113535. A lift is arranged inside the container, and the lift has a lift platform that lifts components up from the container and distributes them onto a rigid plate located on top of the container, and the top surface of this plate constitutes a component pick surface, where the components may be picked by e.g. a robot tool.

In both the above described examples there is a vision system provided to create some kind of image of the components in order to identify pickable components. By a pickable component is meant a component that is oriented in such a way that it can be picked by e.g. a robot tool. The vision system comprises a camera located above the component presentation surface, and the robot tool is controlled based on information received from the camera. Different types of lighting can be used. Most common is to use lighting from above, but there is also the possibility of backlighting, i.e. lighting arranged underneath the display surface.

In order to obtain correct information about the components on the presentation surface, the presentation surface must be clean and not have any defects that may adversely affect the possibility to obtain correct images of the components. This means that the conveyor or plate comprising the component presentation surface must be cleaned and also replaced on a regular basis. If this is not done, gradually accumulating damage that is sufficient to degrade the vision system may go unnoticed. The cleaning is time consuming, but in particular the work required when replacing the conveyor or plate is time consuming since it involves dismounting the entire conveyor or plate and mounting of a new part.

There may also be other reasons for changing the conveyor or plate with the presentation surface, for example changing the colour of the surface to ensure good contrast against the components that are being fed.

### Summary of the invention

An object of the present invention is to provide improvements related to a component feeder and in particular the parts of the feeder that provides the component presentation surface.

According to the present invention is defined a component feeder comprising a container for storage of components, a component supporting arrangement comprising a component supporting member and a component presentation surface, and a transfer arrangement for transferring components from the container onto the component presentation surface. The component supporting arrangement further comprises at least one cover member arranged to cover at least a part of the component supporting member, and the component feeder is characterised by a securing means adapted for releasably securing the at least one cover member to the component supporting member, so that the at least one cover member is configured to be exchangeable.

The main advantage that is achieved is that the entire component supporting member, i.e. the part that bears the weight of the components such as the prior art conveyor or plate, does not have to be replaced when it becomes dirty or worn, or if a different colour is required. Instead it is sufficient to exchange the cover member. This results in time saving since the operation of exchanging the cover member can be done much more quickly than the operation of replacing the entire component supporting member.

It will also result in cost savings, since the life time of the component supporting member can be prolonged due to less wear since it will be protected by the cover member. The use of a cover member also has the advantage that the cover member can be designed to have many different functions, such as protection from dirt and wear as indicated above, having a friction increasing function, having special optical properties etc. These properties may be inherent in the material of the cover member, or they e.g. be provided by means of a coating on substrate.

The securing means may e.g. comprise an adhesive or a mechanical securing means. This will contribute to the advantages described above. According to one embodiment, the securing means may comprise a quick release device configured for mechanically securing a cover member to the component supporting member by a single action and for mechanically releasing the cover member from the component supporting member by a single action. By having a type of quick release device it is possible to exchange the cover member very quickly and to save time when it is required to replace the cover member.

According to one feature, the securing means may comprise a clamping device. The clamping device may for example comprise a spring actuated clamping mechanism, but also other types of clamping devices are conceivable, such as a device based on a snap function. These types of devices have the advantages of being simple and fast to operate, they are cheap and robust.

According to one feature, at least one cover member may be arranged to cover at least a part of a top surface of the component supporting member.

According to another feature, at least one cover member may form at least a part of the component presentation surface.

As an alternative or as a complement, at least one cover member may be arranged to cover at least a part of a bottom surface of the component supporting member.

According to one embodiment, the at least one cover member may comprise a sheet of film. The sheet of film may be of a flexible transparent material, e.g. a plastic material. The film may e.g. be similar to a sheet of overhead film.

According to another embodiment, at least one cover member may comprise an optical film. Examples of an optical film are polarizing filter, light direction film, reflecting film, colour band-pass filter, colour enhancing film, diffuser filter, light enhancing film, so called privacy filter, etc. The optical film may be transparent, it may be opaque, or it may have a specific colour that will provide better contrast background for the components. Thus an optical film provides many opportunities to improve and influence the performance of the vision system and consequently, the information received by the robot, which will result in improved accuracy and efficiency of the robot component picking function.

According to another embodiment, at least one cover member may comprise a sheet of film having a high-friction surface. This can be used e.g. as providing a surface with increased friction for the components, i.e. as part of the component presentation surface. Generally the friction is relative and depends on the interaction between the two parts, i.e. the component presentation and the components that are fed to the surface. Preferably the friction coefficient should be higher than 0,4, and more preferably 0,5-0,8. Another use is to provide a sheet of film, such as an optical film or a simple protective film, with a high-friction surface facing the component support member, or another cover member, such that a relative gliding of the adjacent parts is avoided. The high-friction surface can be obtained either by choosing a material having high friction in itself or as a coating on a film.

According to yet another embodiment, the component supporting arrangement may comprise a combination of several cover members.

According to a further feature, the component supporting member may comprise a rigid plate.

According to an additional feature the component supporting member may comprise at least one guide member along a longitudinal side of the rigid plate. Further features and advantages of the invention will also become apparent from the following detailed description of embodiments.

### Brief description of the drawings

The invention will now be described in more detail, with reference being made to the enclosed schematic drawings illustrating different aspects and embodiments of the invention, given as examples only, and in which:
Fig. 1 illustrates schematically an embodiment of a component feeder according to the invention,
Figs. 2a and 2b illustrate schematically details of the component feeder in Fig. 1,
Fig. 3 illustrates schematically an embodiment of the component supporting arrangement,
Figs. 4a - 4c illustrate schematically details of the securing means of the component supporting arrangement in Fig. 3, in cross section,
Fig. 5 illustrates schematically another embodiment of a component feeder according to the invention,
Fig. 6 illustrates schematically another embodiment of the component supporting arrangement,
Figs. 7a and 7b illustrate schematically details of the securing means of the component supporting arrangement in Fig. 6, in cross section, and
Figs. 8a - 8g illustrate schematically different embodiments related to a cover member.

Elements that are the same or represent corresponding or equivalent elements have been given the same reference numbers in the different figures.

### Detailed description

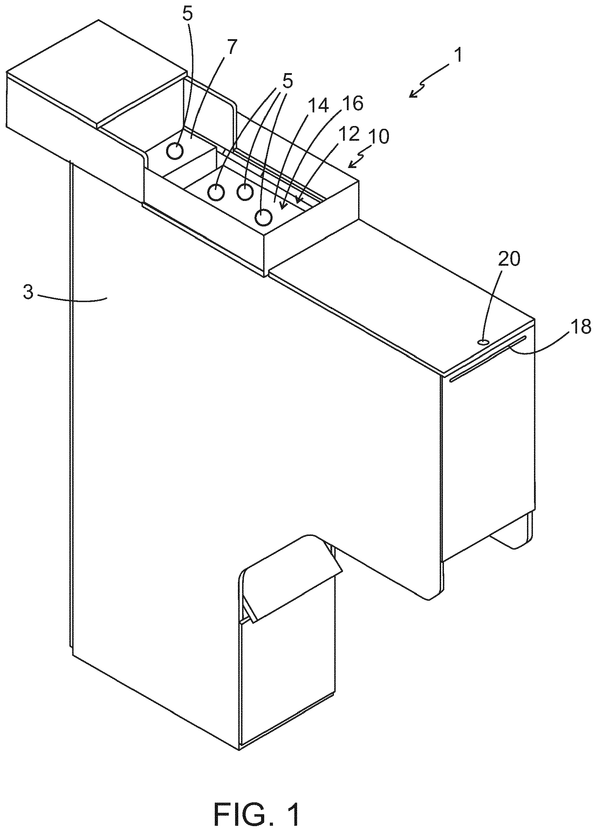

The component feeder 1 illustrated in Fig. 1, given as an example of an embodiment of the present invention, comprises a container 3 for storage of components 5, a component supporting arrangement 10 comprising a component supporting member 12 and a cover member 14, and a component transfer arrangement 7. The cover member 14 is arranged to cover at least a part of the top surface of the component supporting member 12, and the cover member constitutes at least a part of a component presentation surface 16.

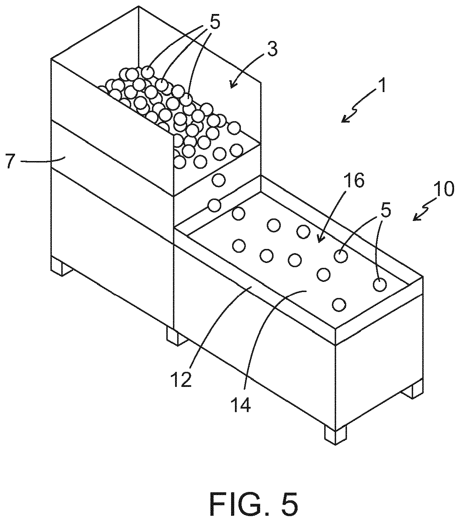

The component transfer arrangement 7 comprises in the illustrated embodiment a lifting device that is located inside the container 3. The lifting device comprises a lift platform, and when the lift platform is at its lower position inside the container, components 5 will assemble on the lift platform and they can then be elevated up to an upper position of the lift platform from where they are distributed onto the component presentation surface 16.This is illustrated in Fig. 1. When the components are displayed on the component presentation surface, a vision system (not illustrated) can generate images of the components and these images are used to control a robot. A robot tool is controlled to pick correctly oriented components based on the information received from the vision system. The vision system can be any type of vision system known per se, e.g. comprising a camera arranged above the component presentation surface and suitable lighting known per se and e.g. as described above in connection with prior art. It should already be mentioned here that the invention is not limited to the illustrated type of feeder having a lift inside the container and a presentation surface on top of the container. The invention can also comprise e.g. a feeder having a container located on the side of the component presentation surface, e.g. as in the previously mentioned "Anyfeed" component feeder, and the component transfer arrangement may e.g. be a simple mechanism that generates a shaking or reciprocating movement that causes components to move or fall from the container onto the presentation surface. An example of such a feeder is illustrated in Fig. 5.

The component supporting arrangement 10 comprises a component supporting member 12 that is sufficiently strong and stable to support the components and carry their weight when they fall onto its top surface, comprising the component presentation surface 16. The component supporting member is in the illustrated embodiment formed of a rigid plate. This plate can be made of e.g. metal or plastic. If it is made of plastic it may be transparent or not. This plate may e.g. be mounted in a frame or it may be mounted in guiding rails provided with grooves such that it can slide in said grooves. In the embodiment illustrated in Fig. 1 the plate may be retractable from the container opening in order to be able to fill the container with new components.

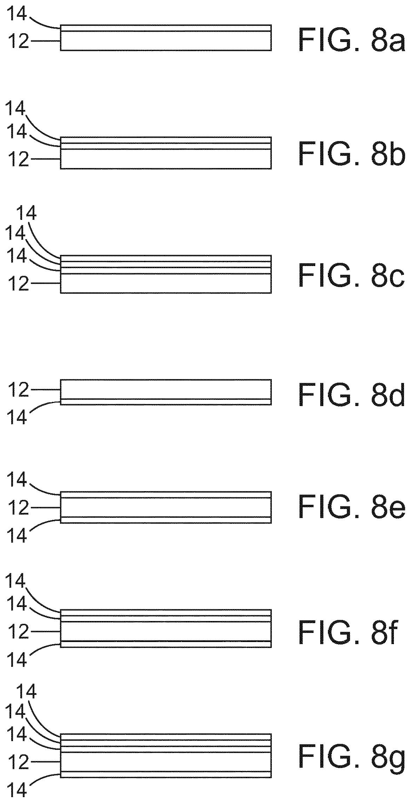

The component supporting arrangement also comprises at least one cover member 14, as mentioned above. The cover member 14 is configured to cover at least a part of the top surface of the component supporting member 12, and thereby constitute at least a part of the component presentation surface 16. The cover member is an exchangeable part, and different combinations of cover members and component supporting members are illustrated in Figs. 8a-8g. Without a cover member, the top surface of the component supporting member would itself constitute the component presentation surface. As such it would be exposed to dirt and wear caused by the components falling onto the surface. However, with a cover member it will be the cover member that is subjected to dirt and wear, and as soon as it does not function properly it can easily be removed and exchanged for a new cover member. One purpose of the cover member may then be described as protecting the underlying component supporting member, which is more difficult to dismount and replace, from dirt and wear.

The cover member may, for example, be a sheet of film, and preferably somewhat flexible.

Another purpose of the cover member may be to provide the component presentation surface with certain properties. For example, the cover member may be an optical film that will provide certain optical properties to the component presentation surface. Examples are polarizing filter, light direction film, reflecting film, colour band-pass filter, colour enhancing film, diffuser filter, light enhancing film, so called privacy filter, etc. The optical film may be transparent, it may be opaque, or it may have a specific colour that will provide better contrast background for the components.

Yet another purpose of the cover member may be to provide a component presentation surface with certain mechanical properties. For example, the cover member may comprise a high friction surface. The high friction surface may be obtained by the choice of material for the cover member, or it may be obtained e.g. by means of a coating on a sheet of film. A component presentation surface with increased friction will prevent unwanted movements of the components on the surface.

An alternative is to provide the previously mentioned sheet of film forming a cover member, which may have a protective function and/or an optical function, with a bottom surface having high friction properties. By bottom surface is meant the surface of the film that faces towards the underlying component supporting member. The friction surface will then keep the film from gliding on top of the component supporting member.

The mentioned high friction properties may for example be obtained by a coating such as "Plastidip" that provides a transparent, flexible, rubber-like coating. This type of coating can also be used to provide the mentioned anti-wear function, since it results in a hard-wearing surface.

The exchangeable cover member can be disposable or reusable.

It is also possible to use a combination of more than one cover members.

In Figs. 8a - 8g is schematically illustrated how one or more cover members 14 may be used together with a component supporting member 12. The illustrated different "layers" could be either layers representing separate cover members or one layer could represent a cover member and the adjoining layer could represent a coating on the cover member.

In Fig. 8a is illustrated a component supporting member 12 having a cover member 14 on its top surface. The cover member can e.g. be a simple protective cover member that protects the component presentation surface from dirt and wear, it can be an optical film or similar, or it can be a friction increasing cover member.

In Fig. 8b is illustrated a component supporting member 12 having a combination of two cover members 14 on its top surface. For example, it may be an optical film with a protection film on top, or it can be an optical film with a friction increasing coating on its bottom surface, facing downwards towards the component supporting member.

In Fig. 8c is illustrated a component supporting member 12 having a combination of three cover members 14 on its top surface. For example, it may be an optical film with a protection film on top, and a friction increasing coating on its bottom surface, facing downwards to the component supporting member.

In Fig. 8d is illustrated a component supporting member 12 that has been provided with a cover member 14 on its downwards facing side. This may for example be a protective film that protects the component supporting member from dirt or wear from underneath. If the component supporting member 12 is a transparent plate, it may be important that the underside is fairly clean since that would also affect the visibility and contrast of the components lying on top of the presentation surface formed by the top surface of the component supporting member 12. In particular this may be important if a backlight arrangement is used, involving light sources arranged underneath the component supporting member. It may also be of particular interest if the component container is located underneath the components supporting member. I may also be possible to have an optical film on the downwards facing side of the component supporting member, which film would then be protected from dirt and wear since there no components lying on its surface. In fact it can be foreseen that all possibilities for single or combinations of cover members that are described with regard to the top surface of the components supporting member, can also be applied to its downwards facing surface.

In Fig. 8e is illustrated an example of a component supporting member 12 that has been provided with a cover member 14 on its downwards facing side, as described in relation to Fig. 8d, and which also has been provided with cover member 14 on its top surface, e.g. as described above in relation to Fig. 8a.

In Fig. 8f is illustrated an example of a component supporting member 12 that has been provided with a cover member 14 on its downwards facing side, as described in relation to Fig. 8d, and which also has been provided with two cover members 14 on its top surface, e.g. as described above in relation to Fig. 8b.

In Fig. 8g is illustrated an example of a component supporting member 12 that has been provided with a cover member 14 on its downwards facing side, as described in relation to Fig. 8d, and which also has been provided with three cover members 14 on its top surface, e.g. as described above in relation to Fig. 8c.

In Fig. 1 is also schematically illustrated how the component feeder 1 is provided with an opening 18 through which at least one cover member 14 is insertable such that it can be placed on top of the component supporting member 12. If there were to be also a cover member on the bottom surface of the component supporting member, there would also be an opening for the insertion of this cover member. In the particular illustrated embodiment of Fig. 1, the component supporting member 12 is designed to be retractable. In the position that the component supporting member has in Fig. 1, the component supporting member covers an opening at the top of the container 3. In order to get access to the interior of the container, e.g. for filling the container with new components, the component supporting member 12 can be retracted from the opening by moving it to the end of the container where the opening 18 for the cover member 14 is located. It is also when the component supporting member is in this position that the exchange of the cover member can take place, as will be explained below. However, it should be pointed out that the invention is not in any way limited to a component feeder having a retractable component supporting member.

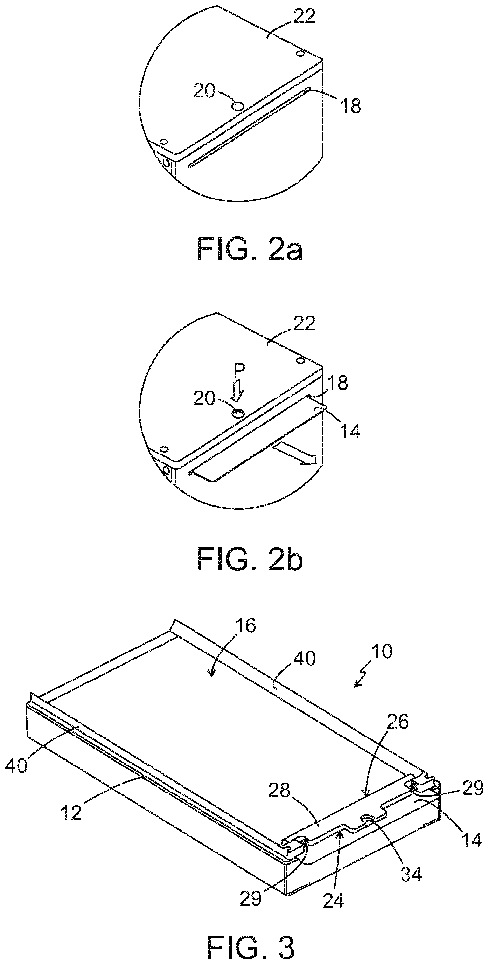

Figs. 2a and 2b illustrate the detail of the opening 18. In Fig. 2b is shown how the cover member 14 can be removed by pressing P on a release button 20 that actuates a release mechanism that will be explained below.

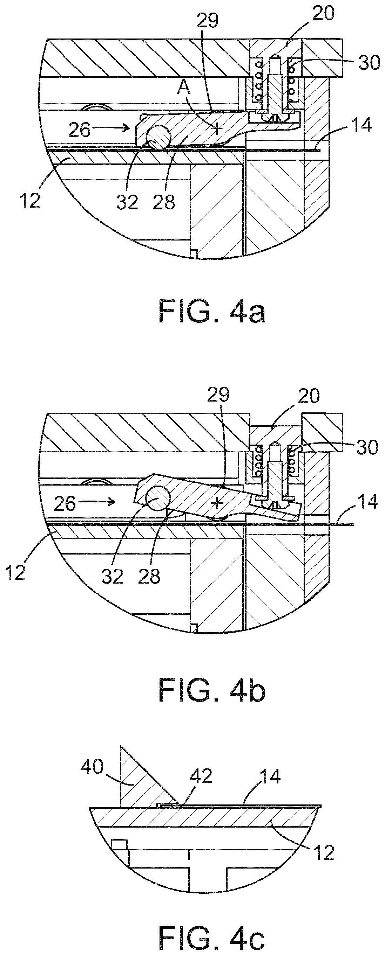

Fig. 3 illustrates schematically an embodiment of the component supporting arrangement 10 of a feeder according to the present invention. In this figure, the housing plate 22 has been removed, in order to disclose what is underneath. The component supporting member 12 is a rigid plate and it is provided with a cover member 14, which can be of any one of the previously described types or combinations thereof. The cover member 14 is releasably secured to the component supporting member by means of a securing means 24. This securing means is illustrated in more detail in Figs. 4a and 4b, showing a cross section taken through the release button 20. The securing means comprises a clamping device 26. The clamping device is in this embodiment a spring actuated clamping mechanism and it comprises a clamp member 28 that presses the cover member 14 against the surface of the components support member 12 by means of the spring force from two torsion springs 29, one at each end of the clamp member, and each one being fixed between said end and a respective fixed holder member, see Fig. 3. The clamp member may be provided with a friction strip 32, e.g. of rubber, that will prevent the cover member 14 from gliding when the clamp member presses the cover member against the component supporting member 12. Preferably, the clamp member 28 is long enough to extend along more or less the entire shorter side of the cover member 14 when the cover member has been inserted through the clamping device 26 and has taken its functional place on top of the component supporting member 12. The clamp member is a lever that is rotatable around an axis A. The clamping force of the clamp member is released by pressing on the release button 20, against the force of the compression spring 30, as shown in Fig. 4b. The tip of the release button will enter into the guiding recess 34 on the upper side of the clamp member 28, and thereby press down one side of the clamp member such that it will rotate about the axis A and the opposite side of the clamp member will move upwards and release the cover member 14. The cover member can then be pulled out, as also shown in Fig. 4b. The same action will be performed when inserting a cover member. Thus, a cover member can be installed by means of the single action of pressing the release button 20 and it can be removed by means of the single action of pressing the release button. In some cases it may also be feasible to insert and install the cover member without pressing down the release button. What is obtained is thus a quick release function.

It is also possible to use component supporting arrangement 10 shown in Fig. 3 in an open feeder having no covering over the component presentation surface. In such a case there is no need for a release button since the clamp member can be operated directly by hand.

As a complement, the component supporting member 12 may comprise a guide member 40 along a longitudinal side of the rigid plate, as shown in Fig. 4c. This guide member is provided with a longitudinal recess in its side facing down towards the plate. This recess is parallel to the top surface of the plate and it only extends for a part of the downwards facing side of the guide member when seen in cross section, which part faces inwards. Together with the top surface of the plate, the recess forms a groove 42 along the entire length of the plate and into which groove the sides of the cover member 14 may be inserted for additional support.

In Fig. 5 another embodiment of a component feeder 1 is schematically illustrated. The component feeder has a container 3 located on the side of the component presentation surface 16, and the component transfer arrangement 7 is a simple mechanism that generates a shaking or reciprocating movement that causes components to move or fall from the container 3 onto the component supporting member 12 comprising the component presentation surface 16. The component supporting member 12 is provided with a cover member 14, which can be of any of the configurations that have been described above. It should be mentioned that this type of component feeder may be provided with the same type of securing means as has been described above, but in the following description an alternative embodiment of the securing means is described that can also be used for this type of component feeder.

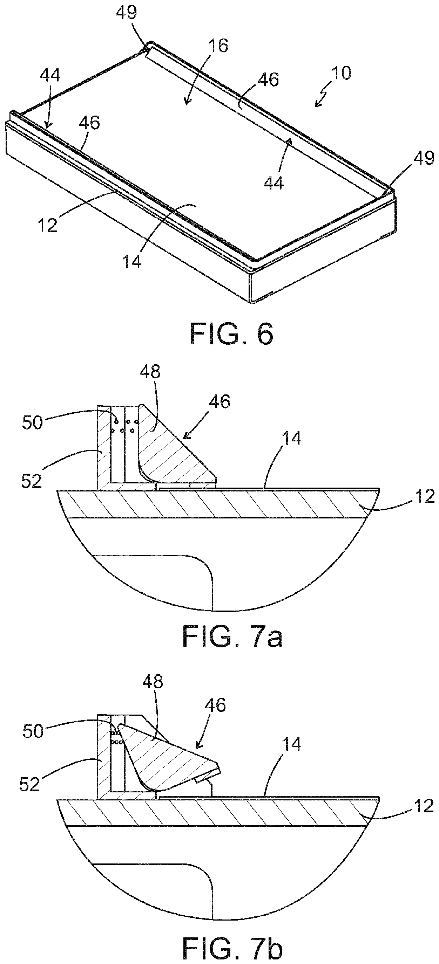

In Figs. 6 and 7a - 7b is shown an alternative embodiment of the securing means comprising a clamping device in the form of a clamp member 46 in the shape of a rail that is arranged along the longitudinal, longer sides of the component supporting member 12, and which is pivotable around a longitudinal axis. In the embodiment illustrated in Fig. 6, the clamp member 46 presses the cover member 14 against the surface of the component support member 12 by means of the spring force from two torsion springs 49, one at each end of the clamp member, and each one being fixed between said end and a respective fixed holder member. This is similar to the arrangement of the clamp member and torsion springs of Fig. 3. The clamp member 46 can simply be lifted up by hand in order to insert or release a cover member.

In alternative embodiment illustrated in Figs. 7a and 7b, the clamping member 46, in the form of a rail, is pressed down towards the surface of the component supporting member 12, by means of a compression spring 50 and thereby it also presses down the cover member 14 on top of the component supporting member and secures it thereto. The spring 50 is arranged between a wall member 52 running along the longer side of the component supporting member 12 and a side of the clamping rail 46 that faces this wall. Preferably there are at least two compression springs, one at each end of the clamping rail. The cover member 14 can be released by pressing the clamping rail outwards, towards the wall member 52. When a new cover member is to be inserted, the same action is performed.

In the illustrated embodiments of Figs. 6, and 7a - 7b there are two clamping rails, one along each longitudinal side. However, it may be feasible to have only one clamping rail. Possibly, a simple groove in the wall on the side opposite the clamping rail may be provided, and into which the side of the cover member may be inserted, if necessary.

As an alternative to the spring-loaded clamping rails in Figs. 6, 7a and 7b, it may be possible to avoid the spring and instead have a clamping device with a snapping function, and comprising a cam element and a groove that can define two positions for the clamping rail, i.e. one clamping position and one release position.

Also other types of securing means for securing a cover member to a top surface or a bottom surface of a component support member are conceivable, e.g. using an adhesive, using static electricity, using an arrangement providing a suction force, etc.

The invention shall not be considered limited to the illustrated embodiments and examples, but can be modified and altered in many ways, as realised by a person skilled in the art, without departing from the scope defined in the appended claims.

## Claims

1. A component feeder (1) comprising a container (3) for storage of components (5), a component supporting arrangement (10) comprising a component supporting member (12) and a component presentation surface (16), at least one cover member (14) arranged to cover at least a part of the component supporting member (12), and a transfer arrangement (7) for transferring components from the container onto the component presentation surface, **characterised by** a securing means (24; 44) adapted for releasably securing the at least one cover member (14) to the component supporting member (12), whereby the at least one cover member (14) is configured to be exchangeable.

2. The component feeder according to claim 1, wherein the securing means (24; 44) comprises a quick release device configured for mechanically securing the at least one cover member (14) to the component supporting member (12) by a single action and for mechanically releasing the cover member (14) from the component supporting member (12) by a single action.

3. The component feeder according to claim 2, wherein the securing means (24; 44) comprises a clamping device (26; 46).

4. The component feeder according to claim 3, wherein the clamping device (26; 46) comprises a spring actuated clamping mechanism.

5. The component feeder according to any one of the preceding claims, wherein at least one cover member (14) is arranged to cover at least a part of a top surface of the component supporting member (12).

6. The component feeder according to any one of the preceding claims, wherein at least one cover member (14) forms at least a part of the component presentation surface (16).

7. The component feeder according to any one of the preceding claims, wherein at least one cover member (14) is arranged to cover at least a part of a bottom surface of the component supporting member (12).

8. The component feeder according to any one of the preceding claims, wherein the at least one cover member (14) comprises a sheet of film.

9. The component feeder according to any one of the preceding claims, wherein at least one cover member (14) comprises a sheet of film of a flexible transparent material.

10. The component feeder according to any one of the preceding claims, wherein at least one cover member (14) comprises an optical film.

11. The component feeder according to any one of the preceding claims, wherein at least one cover member (14) comprises a sheet of film having a high-friction surface.

12. The component feeder according to any one of the preceding claims, wherein the component supporting arrangement (10) comprises a combination of several cover members (14).

13. The component feeder according to any one of the preceding claims, wherein the component supporting member (12) comprises a rigid plate.

14. The component feeder according to claim 13, wherein the component supporting member (12) comprises at least one guide member (40) along a longitudinal side of the rigid plate.

## Patentansprüche

1. Komponentenzuführvorrichtung (1), umfassend einen Behälter (3) zum Aufbewahren von Komponenten (5), eine Komponententrageinrichtung (10), umfassend ein Komponententragelement (12) und eine Komponentenpräsentationsfläche (16), wenigstens ein Abdeckelement (14), das dafür beschaffen ist, wenigstens einen Teil des Komponententragelements (12) abzudecken, und eine Überführungseinrichtung (7) zum Überführen von Komponenten von dem Behälter auf die Komponentenpräsentationsfläche, **gekennzeichnet durch** ein Befestigungsmittel (24; 44), das dafür ausgelegt ist, das wenigstens eine Abdeckelement (14) ablösbar an dem Komponententragelement (12) zu befestigen, wobei das wenigstens eine Abdeckelement (14) dafür gestaltet ist, austauschbar zu sein.

2. Komponentenzuführvorrichtung gemäß Anspruch 1, wobei das Befestigungsmittel (24; 44) eine Schnelllösevorrichtung umfasst, die dafür gestaltet ist, das wenigstens eine Abdeckelement (14) durch eine einzige Handlung mechanisch an dem Komponententragelement (12) zu befestigen und das Abdeckelement (14) durch eine einzige Handlung mechanisch von dem Komponententragelement (12) zu lösen.

3. Komponentenzuführvorrichtung gemäß Anspruch 2, wobei das Befestigungsmittel (24; 44) eine Klemmvorrichtung (26; 46) umfasst.

4. Komponentenzuführvorrichtung gemäß Anspruch 3, wobei die Klemmvorrichtung (26; 46) einen federbetätigten Klemmmechanismus umfasst.

5. Komponentenzuführvorrichtung gemäß einem der vorstehenden Ansprüche, wobei wenigstens ein Abdeckelement (14) dafür beschaffen ist, wenigstens einen Teil einer oberen Oberfläche des Komponententragelements (12) abzudecken.

6. Komponentenzuführvorrichtung gemäß einem der vorstehenden Ansprüche, wobei wenigstens ein Abdeckelement (14) wenigstens einen Teil der Komponentenpräsentationsfläche (16) bildet.

7. Komponentenzuführvorrichtung gemäß einem der vorstehenden Ansprüche, wobei wenigstens ein Abdeckelement (14) dafür beschaffen ist, wenigstens einen Teil einer unteren Oberfläche des Komponententragelements (12) abzudecken.

8. Komponentenzuführvorrichtung gemäß einem der vorstehenden Ansprüche, wobei das wenigstens eine Abdeckelement (14) eine Folie umfasst.

9. Komponentenzuführvorrichtung gemäß einem der vorstehenden Ansprüche, wobei wenigstens ein Abdeckelement (14) eine Folie aus einem flexiblen transparenten Material umfasst.

10. Komponentenzuführvorrichtung gemäß einem der vorstehenden Ansprüche, wobei wenigstens ein Abdeckelement (14) eine optische Folie umfasst.

11. Komponentenzuführvorrichtung gemäß einem der vorstehenden Ansprüche, wobei wenigstens ein Abdeckelement (14) eine Folie mit einer Oberfläche mit hoher Reibung umfasst.

12. Komponentenzuführvorrichtung gemäß einem der vorstehenden Ansprüche, wobei die Komponentenzuführvorrichtung (10) eine Kombination von mehreren Abdeckelementen (14) umfasst.

13. Komponentenzuführvorrichtung gemäß einem der vorstehenden Ansprüche, wobei das Komponententragelement (12) eine starre Platte umfasst.

14. Komponentenzuführvorrichtung gemäß Anspruch 13, wobei das Komponententragelement (12) wenigstens ein Führungselement (40) entlang einer Längsseite der starren Platte umfasst.

## Revendications

1. Dispositif d'alimentation en composants (1) comprenant un conteneur (3) pour le stockage de composants (5), un agencement de support de composants (10) comprenant un élément de support de composants (12) et une surface de présentation de composants (16), au moins un élément de recouvrement (14) agencé pour recouvrir au moins une partie de l'élément de support de composants (12), et un agencement de transfert (7) pour transférer des composants depuis le conteneur sur la surface de présentation de composants, **caractérisé par** un moyen de fixation (24 ; 44) adapté pour fixer de façon détachable l'au moins un élément de recouvrement (14) à l'élément de support de composants (12), l'au moins un élément de recouvrement (14) étant configuré pour être échangeable.

2. Dispositif d'alimentation en composants selon la revendication 1, dans lequel le moyen de fixation (24 ; 44) comprend un dispositif d'attache rapide configuré pour fixer mécaniquement l'au moins un élément de recouvrement (14) à l'élément de support de composants (12) par une seule action et pour libérer mécaniquement l'élément de recouvrement (14) de l'élément de support de composants (12) par une seule action.

3. Dispositif d'alimentation en composants selon la revendication 2, dans lequel le moyen de fixation (24 ; 44) comprend un dispositif de serrage (26 ; 46).

4. Dispositif d'alimentation en composants selon la revendication 3, dans lequel le dispositif de serrage (26 ; 46) comprend un mécanisme de serrage actionné par ressort.

5. Dispositif d'alimentation en composants selon l'une quelconque des revendications précédentes, dans lequel au moins un élément de recouvrement (14) est agencé pour recouvrir au moins une partie d'une surface supérieure de l'élément de support de composants (12).

6. Dispositif d'alimentation en composants selon l'une quelconque des revendications précédentes, dans lequel au moins un élément de recouvrement (14) forme au moins une partie de la surface de présentation de composants (16).

7. Dispositif d'alimentation en composants selon l'une quelconque des revendications précédentes, dans lequel au moins un élément de recouvrement (14) est agencé pour recouvrir au moins une partie d'une surface inférieure de l'élément de support de composants (12).

8. Dispositif d'alimentation en composants selon l'une quelconque des revendications précédentes, dans lequel l'au moins un élément de recouvrement (14) comprend une feuille de film.

9. Dispositif d'alimentation en composants selon l'une quelconque des revendications précédentes, dans lequel au moins un élément de recouvrement (14) comprend une feuille de film d'un matériau souple transparent.

10. Dispositif d'alimentation en composants selon l'une quelconque des revendications précédentes, dans lequel au moins un élément de recouvrement (14) comprend un film optique.

11. Dispositif d'alimentation en composants selon l'une quelconque des revendications précédentes, dans lequel au moins un élément de recouvrement (14) comprend une feuille de film ayant une surface à coefficient de frottement élevé.

12. Dispositif d'alimentation en composants selon l'une quelconque des revendications précédentes, dans lequel l'agencement de support de composants (10) comprend une combinaison de plusieurs éléments de recouvrement (14).

13. Dispositif d'alimentation en composants selon l'une quelconque des revendications précédentes, dans lequel l'élément de support de composants (12) comprend une plaque rigide.

14. Dispositif d'alimentation en composants selon la revendication 13, dans lequel l'élément de support de composants (12) comprend au moins un élément de guidage (40) le long d'un côté longitudinal de la plaque rigide.
